# EUROPEAN PATENT APPLICATION

(11) **EP 3 825 350 A1**
(43) Date of publication of application: **26.05.2021**
(21) Application number: 19210539.3
(22) Date of filing: 21.11.2019
(51) Int. Cl.: C08J 5/06

(54) **COMPOSITES WITH REDUCED WEIGHT AND IMPROVED INTERFACIAL STRENGTH**

(71) Applicant: SHPP Global Technologies B.V., 4612 PX Bergen op Zoom (NL)
(72) Inventor: Farrell, Tony, 4612 PX Bergen op Zoom (NL); Dekkers, Josephus Hubertus Cornelius Maria, 4612 PX Bergen op Zoom (NL)
(74) Representative: Modiano, Micaela Nadia

(57) **Abstract**

A composite including a product of a reactive fiber system and a reactive polymer composition, wherein the reactive fiber system includes: a non-woven fiber; and a binder including a binder reactive functional group, and the reactive polymer composition includes a thermoplastic polymer reactive with the binder reactive functional group; and wherein the composite includes a modified thermoplastic polymer including a reaction product of the thermoplastic polymer and the binder reactive functional group.

## Description

### BACKGROUND

This disclosure is directed to methods for improving the interfacial strength and reducing the weight of a composite, and the composites formed by the methods.

Composite laminates can be used to form structures having advantageous structural characteristics, such as high strengths, high stiffnesses, or the like, as well as relatively low weights when compared to similar structures formed from conventional materials. As a result, composite laminates are used in a variety of applications across a wide range of industries, including the automotive, aerospace, and consumer electronics industries.

Structural characteristics of a laminate can depend heavily on interfacial properties of the fibers and the matrix material, such as wettability and adhesion. For example, poor wettability can cause insufficient impregnation of the fibers with the matrix material during production of the laminate, resulting in unpredictable or undesirable characteristics in the laminate. For further example, poor adhesion can reduce the strength or stiffness of the laminate by, for example, encouraging debonding between the fibers and the polymeric matrix material under stress or external forces.

### BRIEF DESCRIPTION

Provided is a composite including a product of a reactive fiber system and a reactive polymer composition, wherein the reactive fiber system includes: a non-woven fiber; and a binder including a binder reactive functional group, and the reactive polymer composition includes a thermoplastic polymer reactive with the binder reactive functional group; and wherein the composite includes a modified thermoplastic polymer including a reaction product of the thermoplastic polymer and the binder reactive functional group.

Also provided is a method of making the composite, including: heating the reactive fiber system and the reactive polymer composition under conditions effective to form the modified thermoplastic polymer.

Further provided is an article including the composite.

The above described and other features are exemplified by the following figures and detailed description.

### BRIEF DESCRIPTION OF THE DRAWINGS

FIG. 1 schematically shows a composite precursor including a reactive fiber system and a reactive polymer composition, and the formation of a composite including a modified thermoplastic polymer in accordance with one or more aspects of the disclosure.
FIG. 2 is a scanning electron microscope (SEM) image of a composite prepared from a non-reactive binder.
FIG. 3 is a close-up SEM image of the SEM image in FIG. 1.
FIG. 4 is an SEM image of a composite prepared from a reactive binder in accordance with one or more aspects of the disclosure.
FIG. 5 is a close-up SEM image of the SEM image of FIG. 3.

### DETAILED DESCRIPTION

The present disclosure relates to composites derived from a reactive fiber system and a thermoplastic polymer, methods of preparing these composites, and articles including these composites. The reactive fiber system is obtained from a non-woven fiber and a reactive binder. The composite is processed to form a covalent bond between the reactive fiber system and the thermoplastic polymer via polymer chain scission, resulting in the formation of a modified thermoplastic polymer. The covalent bond increases the compatibility and interfacial adhesion between the thermoplastic polymer composition (i.e., the matrix) and the reactive fiber system thereby enhancing the performance of the composite under stress forces. This improved adhesion between the fibers and the matrix also gives a better strength to density ratio, which is highly desired in technologies where the weight of the part is important such as in automotive, aircraft, and rail applications.

Disclosed in various aspects herein is a composite including a reactive fiber system and a reactive polymer composition. In the composite, the reactive fiber system includes a non-woven fiber and a binder including a binder reactive functional group. The reactive polymer composition includes a thermoplastic polymer that is reactive with the binder reactive functional group. The composite includes a modified thermoplastic polymer including a reaction product of the thermoplastic polymer and the binder reactive functional group.

The modified thermoplastic polymer can be covalently bonded to the reactive fiber system. For example, the modified thermoplastic polymer can be derived from the reaction of the thermoplastic polymer and the binder reactive functional group via chain scission of the thermoplastic polymer backbone to form the covalent bond. For example, the covalent bond can be formed between, or can be between, a residue derived from the binder reactive functional group and the polymer backbone of the thermoplastic polymer. The composite can include both the thermoplastic polymer and the modified thermoplastic polymer. It is to be understood that when the thermoplastic polymer is reacted with the binder reactive functional group to form the modified thermoplastic polymer, the binder including the binder reactive functional group is disposed on, for example is coated on, the non-woven fiber in the fiber reactive system. Thus, the covalent bond formed is between the modified thermoplastic polymer and the fiber reactive system, which increases the compatibility and interfacial adhesion between the matrix (i.e., the reactive polymer composition and the modified thermoplastic polymer) and the reactive fiber system of the composite.

In some aspects, the composite further includes a cleaved thermoplastic polymer that is derived from the thermoplastic polymer via chain scission and that is not covalently bonded to the reactive fiber system. Thus, the binder reactive functional group can react with the thermoplastic polymer to cleave a polymer chain to form a first cleaved polymer chain and a second cleaved polymer chain. The first cleaved polymer chain can further react with the binder reactive functional group to form the modified thermoplastic, and the second cleaved polymer chain is the cleaved thermoplastic polymer that is not covalently bonded to the reactive fiber system. In an aspect, the composite includes the modified thermoplastic polymer, the cleaved thermoplastic polymer, and the thermoplastic polymer. It is to be understood that the thermoplastic polymer in the composite is unreacted via chain scission, whereas the modified thermoplastic polymer and the cleaved thermoplastic polymer are each derived via chain scission of the thermoplastic polymer of a composite precursor. The "composite precursor" is a combination of the reactive fiber system and the reactive polymer composition before forming the modified thermoplastic polymer.

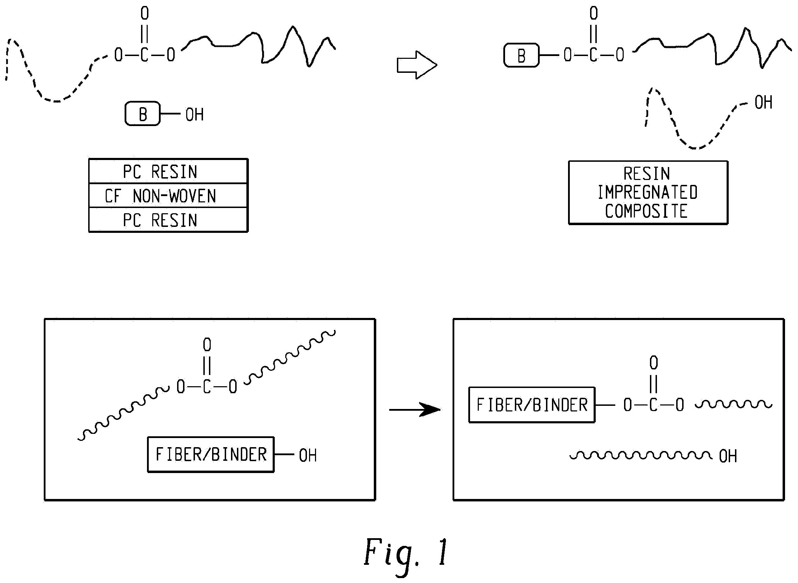

FIG. 1 schematically shows a composite precursor (left side) including a reactive fiber system and the thermoplastic polymer of a reactive polymer composition in accordance with an exemplary aspect. In the exemplary aspect of FIG. 1, the thermoplastic polymer is a polycarbonate and the reactive fiber system includes polyvinyl alcohol. In this aspect, subsequent processing of the composite precursor using the conditions described herein results in the formation of the composite (right side) that includes the modified thermoplastic polymer and the cleaved thermoplastic polymer. For simplicity, the unreacted thermoplastic polymer in the composite is not shown.

In the composite, a weight average molecular weight (M_{w}) of the cleaved thermoplastic polymer and the thermoplastic polymer after composite formation can be less than a M_{w} of the thermoplastic polymer prior to composite formation, as determined by gel permeation chromatography (GPC). For example, the M_{w} of the cleaved thermoplastic polymer and the thermoplastic polymer after composite formation can be 3 to 30 weight percent (wt%), or 5 to 30 wt%, or 8 to 30 wt%, or 10 to 30 wt% less than the M_{w} of the thermoplastic polymer prior to composite formation, as determined by gel permeation chromatography (GPC). GPC can be performed a crosslinked divinyl benzene column and polystyrene standards. It is to be understood that the change in M_{w} also can be described as the M_{w} of a polymer composition including the cleaved thermoplastic polymer and the thermoplastic polymer after composite formation relative to the M_{w} of the reactive polymer composition including the thermoplastic polymer prior to composite formation.

In an aspect, 5 to 90 wt%, or 15 to 90 wt% of the composite can be the modified thermoplastic polymer, based on the total weight of the modified thermoplastic polymer, the thermoplastic polymer, and optionally the cleaved thermoplastic polymer. For example, 5 to 90 wt%, or 15 to 90 wt% of the composite can be the modified thermoplastic polymer, based on the total weight of the modified thermoplastic polymer, the cleaved thermoplastic polymer, and the thermoplastic polymer. It is to be understood that the amount of the modified thermoplastic polymer is based on the total weight of all of the polymer components in the composite after formation.

The total amount of the thermoplastic polymer and the modified thermoplastic polymer in the composite can be substantially the same as the amount of thermoplastic polymer in the composite precursor, or for example the same amount. In an aspect, the total amount of the thermoplastic polymer, the modified thermoplastic polymer, and the cleaved thermoplastic polymer in the composite can be substantially the same as the amount of thermoplastic polymer in the composite precursor, or for example the same amount.

At least a portion, or an amount, of the thermoplastic polymer of the reactive polymer composition in the composite precursor reacts with, or has been reacted with, the binder reactive functional group via chain scission to form a first cleaved polymer chain and the corresponding remaining part of the polymer backbone, herein referred to as the second cleaved polymer chain or cleaved thermoplastic polymer. Accordingly, the first cleaved polymer chain corresponds to the modified thermoplastic polymer. In an aspect, 5 to 90 wt%, or 15 to 90 wt% of the thermoplastic polymer present in the reactive polymer composition of a composite precursor reacts with the binder reactive functional group to form the modified thermoplastic polymer of the composite. It is to be understood that the modified thermoplastic polymer described in this paragraph can also be referred to as the "first modified thermoplastic polymer".

In an aspect, the composite can further include a product of a reaction between the second cleaved polymer chain, i.e. the cleaved thermoplastic polymer, and another component of the composite. For example, the cleaved thermoplastic polymer can react with a second thermoplastic polymer, an additive, the non-woven fiber, another component, or a combination thereof, to form an additional modified thermoplastic polymer, which can also be referred to herein as the "second modified thermoplastic polymer". In an aspect, the total amount of the thermoplastic polymer, the first modified thermoplastic polymer, and the second modified thermoplastic polymer in the composite can be substantially the same as the amount of the reactive polymer composition of the composite precursor, or for example the same amount. In an aspect, the total amount of the thermoplastic polymer, the first modified thermoplastic polymer, and the second modified thermoplastic polymer in the composite can be substantially the same as the amount of thermoplastic polymer in the composite precursor, or for example the same amount.

In an aspect, the first modified thermoplastic polymer or the second modified thermoplastic polymer can be reactive with, or further react with, the binder reactive functional group, a second thermoplastic polymer, an additive, the non-woven fiber, another component, or a combination thereof, to form another modified thermoplastic polymer, for example a third, a fourth, a fifth, or the like modified thermoplastic polymer(s). In an aspect, the total amount of the thermoplastic polymer, the first modified thermoplastic polymer, the second modified thermoplastic polymer, and the third, fourth, fifth, or more modified thermoplastic polymer(s) in the composite can be substantially the same as the amount of the reactive polymer composition in the composite precursor, or for example the same amount. In an aspect, the total amount of the thermoplastic polymer, the first modified thermoplastic polymer, the second modified thermoplastic polymer, and the third, fourth, fifth, or more modified thermoplastic polymer(s) in the composite can be substantially the same as the amount of the thermoplastic polymer in the composite precursor, or for example the same amount.

The composite precursor can include 10 to 80 wt% of the reactive fiber system, based on the total weight of the composite precursor. For example, the composite precursor can include 10 to 60 wt% or 10 to 50 wt% of the reactive fiber system, based on the total weight of the composite precursor.

In an aspect, the product of the reactive fiber system and the reactive polymer composition can be derived from 10 to 80 wt% of the reactive fiber system, based on the total weight of the reactive fiber system and the reactive polymer composition used to prepare the product. For example, the product can be derived from 10 to 60 wt% or 10 to 50 wt% of the reactive fiber system.

The surface density (i.e., areal density) of the reactive fiber system is not particularly limited. For example, the reactive fiber system can have a surface density of 30 to 200 grams per square meter (g/m²), or 40 to 180 g/m², or 40 to 150 g/m².

The reactive fiber system includes a non-woven fiber. It is to be understood herein that the reactive fiber system includes a plurality of non-woven fibers that have been preprocessed with the binder including the binder reactive functional group. For example, the reactive fiber system can be derived from 80 to 99 wt%, or 85 to 97 wt%, or 85 to 95 wt% of the non-woven fiber, based on the total weight of the non-woven fiber and the binder. The term "non-woven fiber" can be used interchangeably with the term "plurality of non-woven fibers".

The non-woven fiber can be a mineral fiber, a plant fiber, a synthetic fiber, or a combination thereof. Exemplary non-woven fiber includes, but is not limited to, glass fiber, glass wool fiber, mineral wool fiber, slag wool fiber, stone wool fiber, basalt fiber, silica fiber, quartz fiber, alumina fiber, steel fiber, silicon carbide fiber, acrylic fiber, carbon fiber, melamine fiber, polyester fiber, polyethylene fiber, polyethylene terephthalate fiber, polylactic acid fiber, polypropylene fiber, polyamide fiber, polyaramid fiber, polyimide fiber, polyphenylene sulfide fiber, polytetrafluoroethylene fiber, cellulosic fiber, cotton fiber, jute fiber, kenaf fiber, bamboo fiber, hemp fiber, linen fiber, and flax fiber. A combination of two or more non-woven fibers can be used. The non-woven fiber can be a carbon fiber.

The glass fiber can be E, A, C, ECR, R, S, D, or NE glass, or the like, or a combination thereof. The glass fibers can be made by standard processes, e.g., by steam or air blowing, flame blowing, and mechanical pulling. Exemplary glass fibers are made by mechanical pulling.

The fiber can be continuous or chopped. Fibers in the form of chopped strands can have a length of 0.3 millimeters (mm) to 10 centimeters (cm), or 0.5 mm to 5 cm, or 1.0 mm to 2.5 cm. For example, the fiber can have a length from 0.2-20 mm, or 0.2-10 mm, or 0.7-7 mm. The fibers can have any cross-section, such as a round (or circular), flat, or irregular cross-section. For example, the fiber has a circular cross-section. The diameter of the fiber can be from 1-25 micrometers (µm), or 3-20 µm, or 4-18 µm, or 5-17 µm. For example, the fiber can be a short glass fiber having a diameter of 10 µm. Flat glass or bilobe fibers can be used to provide, for example, low warp-high strength articles.

The non-woven fiber is processed with, or coated with, a binder including a binder reactive functional group to form the reactive fiber system. For example, the reactive fiber system can be a wet laid mat of non-woven fibers and binder. The choice of binder is not particularly limited, provided the binder compound includes the binder reactive functional group. The binder reactive functional group can be hydroxyl, carboxyl, carboxylic anhydride, haloformyl, epoxy, silanol, amino, mercapto, vinyl, or a combination thereof. The binder reactive functional group, and the corresponding binder compound, can be selected based on the thermoplastic polymer of the reactive polymer composition and its associated reactivity. Commercially available fiber/binder systems can be used.

The binder can be a polymer or resin such as polyurethanes, siloxane resins, polyacrylates, polyvinyl alcohols, polyamines, epoxy resins, phenoxy resins, melamine resins, urea resins, mercapto-containing polymers, carboxyl-containing polymers, and the like, or combinations thereof. For example, the binder can be polyvinyl alcohol.

The reactive fiber system can be derived from the non-woven fiber and 1 to 20 wt% of the binder, based on the total weight of the non-woven fiber and the binder. For example, the reactive fiber system is derived from the non-woven fiber and 3 to 15 wt% or 5 to 15 wt% of the binder, based on the total weight of the non-woven fiber and the binder.

The thermoplastic polymer is not particularly limited and can be any thermoplastic polymer or copolymer that is reactive with the functional group of the binder by polymer chain scission to form a modified thermoplastic polymer.

Thermoplastic polymers include polycarbonate, polyacetal, poly(C₁₋₆ alkyl)acrylate, polyacrylamide, polyamide, polyamideimide, polyanhydride, polyarylate, polyarylene ether, polyarylene sulfide, polyarylene sulfone, polybenzothiazole, polybenzoxazole, polyester, polyetheretherketone, polyetherimide, polyetherketoneketone, polyetherketone, polyethersulfone, polyimide, poly(C₁₋₆ alkyl)methacrylate, polymethacrylamide, polynorbornene, polyolefin, polyoxadiazole, polyoxymethylene, polyphthalide, polysilazane, polysiloxane, polystyrene, polysulfide, polysulfonamide, polysulfonate, polysulfone, polythioester, polytriazine, polyurea, polyurethane, polyvinyl alcohol, polyvinyl ester, polyvinyl ether, polyvinyl halide, polyvinyl ketone, polyvinyl thioether, polyvinylidene fluoride, a copolymer thereof, or a combination thereof. For example, the thermoplastic polymer can be polyester, polycarbonate, polyamide, polyurethane, polyurea, a random or block poly(carbonate ester), poly(carbonate ether), poly(ester ether), poly(carbonate ether ester), poly(ester amide), poly(ester ether amide), poly(carbonate amide), poly(carbonate ether amide), poly(ester urethane), poly(ester ether-urethane), poly(carbonate urethane), poly(carbonate ether urethane), poly(ester urea), poly(ester ether urea), poly(carbonate urea), poly(carbonate ether urea), poly(ether amide), poly(amide urethane), poly(amide urea), poly(urethane urea), poly(arylene ether), or a combination thereof.

In an aspect, the thermoplastic polymer is a polycarbonate. "Polycarbonate" as used herein means a polymer having repeating structural carbonate units of formula (1) 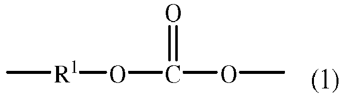 in which at least 60 percent of the total number of R¹ groups contain aromatic moieties and the balance thereof are aliphatic, alicyclic, or aromatic. In an aspect, each R¹ is a C₆₋₃₀ aromatic group, that is, contains at least one aromatic moiety. R¹ can be derived from an aromatic dihydroxy compound of the formula HO-R¹-OH, of formula (2)

HO-A¹-Y¹-A²-OH (2)

wherein each of A¹ and A² is a monocyclic divalent aromatic group and Y¹ is a single bond or a bridging group having one or more atoms that separate A¹ from A². In an aspect, one atom separates A¹ from A². Each R¹ can be derived from a bisphenol of formula (3) 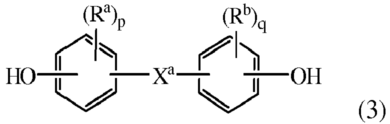 wherein R^{a} and R^{b} are each independently a halogen, C₁₋₁₂ alkoxy, or C₁₋₁₂ alkyl, and p and q are each independently integers of 0 to 4. It will be understood that when p or q is less than 4, the valence of each carbon of the ring is filled by hydrogen. In formula (3), X^{a} is a bridging group connecting the two hydroxy-substituted aromatic groups, where the bridging group and the hydroxy substituent of each C6 arylene group are disposed ortho, meta, or para to each other on the C6 arylene group. In an aspect, the bridging group X^{a} is single bond, -O-, -S-, -S(O)-, -S(O)₂-, -C(O)-, or a C₁₋₆₀ organic group. The organic bridging group can be cyclic or acyclic, aromatic or non-aromatic, and can further include heteroatoms such as halogens, oxygen, nitrogen, sulfur, silicon, or phosphorous. The ₁₋₆₀ organic group can be disposed such that the C6 arylene groups connected thereto are each connected to a common alkylidene carbon or to different carbons of the C₁₋₆₀ organic bridging group. In an aspect, p and q is each 1, and R^{a} and R^{b} are each a C₁₋₃ alkyl group, for example methyl, disposed meta to the hydroxy group on each arylene group.

In an aspect, X^{a} is a C₃₋₁₈ cycloalkylidene, a C₁₋₂₅ alkylidene of formula - C(R^{c})(R^{d}) - wherein R^{c} and R^{d} are each independently hydrogen, C₁₋₁₂ alkyl, C₁₋₁₂ cycloalkyl, C₇₋₁₂ arylalkyl, C₁₋₁₂ heteroalkyl, or cyclic C₇₋₁₂ heteroarylalkyl, or a group of the formula - C(=R^{e})- wherein R^{e} is a divalent C₁₋₁₂ hydrocarbon group. Groups of these types include methylene, cyclohexylmethylidene, ethylidene, neopentylidene, and isopropylidene, as well as 2-[2.2.1]-bicycloheptylidene, cyclohexylidene, 3,3-dimethyl-5-methylcyclohexylidene, cyclopentylidene, cyclododecylidene, and adamantylidene.

In another aspect, X^{a} is a C₁₋₁₈ alkylene, a C₃₋₁₈ cycloalkylene, a fused C₆₋₁₈ cycloalkylene, or a group of the formula -J¹-G-J²- wherein J¹ and J² are the same or different C₁₋₆ alkylene and G is a C₃₋₁₂ cycloalkylidene or a C₆₋₁₆ arylene.

For example, X^{a} can be a substituted C₃₋₁₈ cycloalkylidene of formula (4) 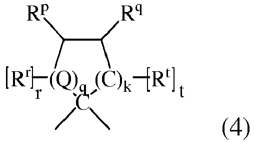 wherein R^{r}, R^{p}, R^{q}, and R^{t} are each independently hydrogen, halogen, oxygen, or C₁₋₁₂ hydrocarbon groups; Q is a direct bond, a carbon, or a divalent oxygen, sulfur, or -N(Z)- where Z is hydrogen, halogen, hydroxy, C₁₋₁₂ alkyl, C₁₋₁₂ alkoxy, C₆₋₁₂ aryl, or C₁₋₁₂ acyl; r is 0 to 2, t is 1 or 2, q is 0 or 1, and k is 0 to 3, with the proviso that at least two of R^{r}, R^{p}, R^{q}, and R^{t} taken together are a fused cycloaliphatic, aromatic, or heteroaromatic ring. It will be understood that where the fused ring is aromatic, the ring as shown in formula (4) will have an unsaturated carbon-carbon linkage where the ring is fused. When k is one and q is 0, the ring as shown in formula (4) contains 4 carbon atoms, when k is 2, the ring as shown in formula (4) contains 5 carbon atoms, and when k is 3, the ring contains 6 carbon atoms. In an aspect, two adjacent groups (e.g., R^{q} and R^{t} taken together) form an aromatic group, and in another aspect, R^{q} and R^{t} taken together form one aromatic group and R^{r} and R^{p} taken together form a second aromatic group. When R^{q} and R^{t} taken together form an aromatic group, R^{p} can be a double-bonded oxygen atom, i.e., a ketone, or Q can be -N(Z)- wherein Z is phenyl.

Bisphenols wherein X^{a} is a cycloalkylidene of formula (4) can be used in the manufacture of polycarbonates containing phthalimidine carbonate units of formula (1a) 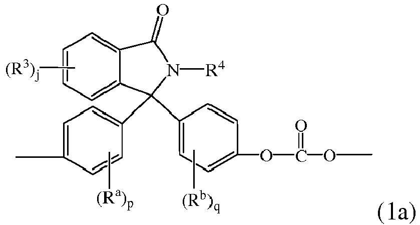 wherein R^{a}, R^{b}, p, and q are as in formula (3), R³ is each independently a C₁₋₆ alkyl, j is 0 to 4, and R₄ is hydrogen, C₁₋₆ alkyl, or a substituted or unsubstituted phenyl, for example a phenyl substituted with up to five C₁₋₆ alkyls. For example, the phthalimidine carbonate units are of formula (1b) 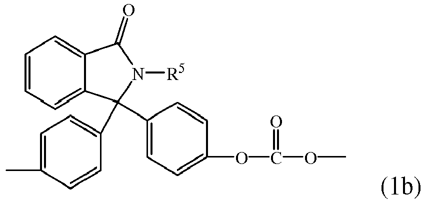 wherein R⁵ is hydrogen, phenyl optionally substituted with up to five 5 C₁₋₆ alkyls, or C₁₋₄ alkyl. In an aspect in formula (1b), R⁵ is hydrogen, methyl, or phenyl. Carbonate units (1b) wherein R⁵ is phenyl can be derived from 2-phenyl-3,3'-bis(4-hydroxy phenyl)phthalimidine (also known as 3,3-bis(4-hydroxyphenyl)-2-phenylisoindolin-1-one, or N-phenyl phenolphthalein bisphenol ("PPPBP")).

Other bisphenol carbonate repeating units of this type are the isatin carbonate units of formula (1c) and (1d) 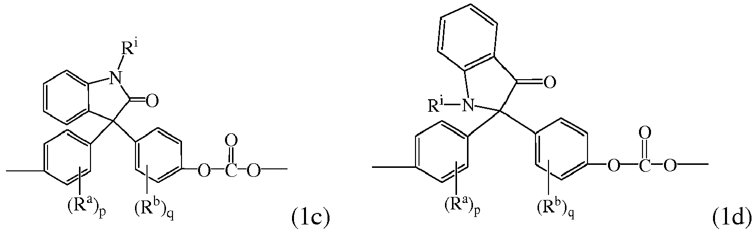 wherein R^{a} and R^{b} are each independently a halogen, C₁₋₁₂ alkoxy, or C₁₋₁₂ alkyl, p and q are each independently 0 to 4, and Rⁱ is C₁₋₁₂ alkyl, phenyl optionally substituted with 1 to 5 C₁₋₁₀ alkyl, or benzyl optionally substituted with 1 to 5 C₁₋₁₀ alkyl. In an aspect, R^{a} and R^{b} are each methyl, p and q are each independently 0 or 1, and Rⁱ is C₁₋₄ alkyl or phenyl.

Other examples of bisphenol carbonate units derived from of bisphenols (3) wherein X^{a} is a substituted or unsubstituted C₃₋₁₈ cycloalkylidene include the cyclohexylidene-bridged bisphenol of formula (1e) 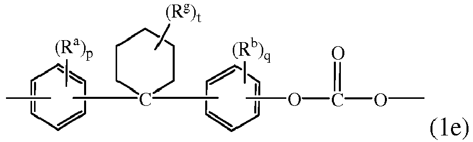 wherein R^{a} and R^{b} are each independently C₁₋₁₂ alkyl, R^{g} is C₁₋₁₂ alkyl, p and q are each independently 0 to 4, and t is 0 to 10. In a specific aspect, at least one of each of R^{a} and R^{b} are disposed meta to the cyclohexylidene bridging group. In an aspect, R^{a} and R^{b} are each independently C₁₋₄ alkyl, R^{g} is C₁₋₄ alkyl, p and q are each 0 or 1, and t is 0 to 5. In another aspect, R^{a}, R^{b}, and R^{g} are each methyl, p and q are each 0 or 1, and t is 0 or 3. In an aspect, t can be 0. In still another aspect, p and q are each 0, each R^{g} is methyl, and t is 3, such that X^{a} is 3,3-dimethyl-5-methyl cyclohexylidene.

Examples of other bisphenol carbonate units derived from bisphenol (3) wherein X^{a} is a substituted or unsubstituted C₃₋₁₈ cycloalkylidene include adamantyl units of formula (If) and fluorenyl units of formula (1g) 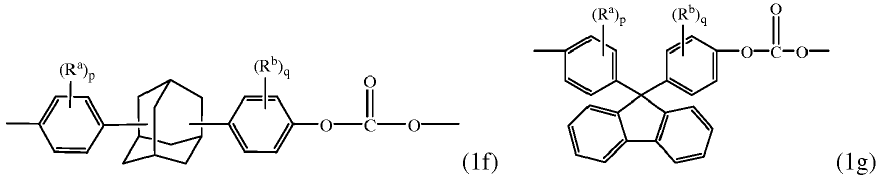 wherein R^{a} and R^{b} are each independently C₁₋₁₂ alkyl, and p and q are each independently 1 to 4. In a specific aspect, at least one of each of R^{a} and R^{b} are disposed meta to the cycloalkylidene bridging group. In an aspect, R^{a} and R^{b} are each independently C₁₋₃ alkyl, and p and q are each 0 or 1. In an aspect, R^{a}, R^{b} are each methyl, p and q are each 0 or 1, and when p and q are 1, the methyl group is disposed meta to the cycloalkylidene bridging group. Carbonates containing units (1a) to (1g) are useful for making polycarbonates with high glass transition temperatures (Tg) and high heat distortion temperatures.

Other useful dihydroxy compounds of the formula HO-R¹-OH include aromatic dihydroxy compounds of formula (6) 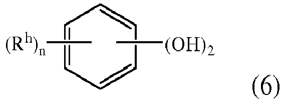 wherein each R^{h} is independently a halogen atom, C₁₋₁₀ hydrocarbyl group such as a C₁₋₁₀ alkyl, a halogen-substituted C₁₋₁₀ alkyl, a C₆₋₁₀ aryl, or a halogen-substituted C₆₋₁₀ aryl, and n is 0 to 4. The halogen is usually bromine.

Some illustrative examples of specific dihydroxy compounds include the following: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like, or a combination thereof.

Specific examples of bisphenol compounds of formula (3) include 1,1-bis(4-hydroxyphenyl) methane, 1,1-bis(4-hydroxyphenyl) ethane, 2,2-bis(4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-2-methylphenyl) propane, 1,1-bis(4-hydroxy-t-butylphenyl)propane, 3,3-bis(4-hydroxyphenyl) phthalimidine, 2-phenyl-3,3-bis(4-hydroxyphenyl) phthalimidine (PPPBP), and 1,1-bis(4-hydroxy-3-methylphenyl)cyclohexane (DMBPC). A combination can also be used. In a specific aspect, the polycarbonate is a linear homopolymer derived from bisphenol A, in which each of A¹ and A² is p-phenylene and Y¹ is isopropylidene in formula (3).

In a further aspect, the polycarbonate can be a linear homopolymer derived from bisphenol A, in which each of A¹ and A² is p-phenylene and Y¹ is isopropylidene. The polycarbonates can have an intrinsic viscosity, as determined in chloroform at 25°C, of 0.3 to 1.5 deciliters per gram (dL/g), for example 0.45 to 1.0 dL/g. The polycarbonates can have a weight average molecular weight (M_{w}) of 10,000 to 100,000 grams per mole (g/mol), as measured by GPC using a crosslinked styrene-divinyl benzene column with polycarbonate standards. In a yet further aspect, the polycarbonate has an M_{w} of 15,000 to 55,000 g/mol. In an even further aspect, the polycarbonate has an M_{w} of 18,000 to 40,000 g/mol.

"Polycarbonate" includes homopolycarbonates (wherein each R¹ in the polymer is the same), copolymers including different R¹ moieties in the carbonate ("copolycarbonates"), and copolymers including carbonate units and other types of polymer units, such as ester units or siloxane units.

A specific type of copolymer is a poly(ester-carbonate), also known as a polyester-polycarbonate. Such copolymers further contain, in addition to recurring carbonate units of formula (1), repeating units of formula (7) 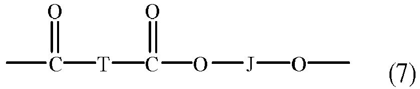 wherein J is a divalent group derived from a dihydroxy compound (including a reactive derivative thereof), and can be, for example, a C₁₋₁₀ alkylene, a C₆₋₂₀ cycloalkylene, a C₅₋₂₀ arylene, or a polyoxyalkylene in which the alkylene groups contain 2 to 6 carbon atoms, such as 2, 3, or 4 carbon atoms; and T is a divalent group derived from a dicarboxylic acid (including a reactive derivative thereof), and can be, for example, a C₂₋₂₀ alkylene, a C₅₋₂₀ cycloalkylene, or a C₆₋₂₀ arylene. Copolyesters containing a combination of different T or J groups can be used. The polyester units can be branched or linear.

In an aspect, J is a C₂₋₃₀ alkylene group having a straight chain, branched chain, or cyclic (including polycyclic) structure, for example ethylene, n-propylene, i-proplyene, 1,4-butylene, 1,4-cyclohexylene, or 1,4-methylenecyclohexane. In another aspect, J is derived from a bisphenol of formula (3), e.g., bisphenol A. In still another aspect, J is derived from an aromatic dihydroxy compound of formula (6), e.g., resorcinol.

Aromatic dicarboxylic acids that can be used to prepare the polyester units include isophthalic or terephthalic acid, 1,2-di(p-carboxyphenyl)ethane, 4,4'-dicarboxydiphenyl ether, 4,4'-bisbenzoic acid, or a combination thereof. Acids containing fused rings can also be present, such as in 1,4-, 1,5-, or 2,6-naphthalenedicarboxylic acids. Specific dicarboxylic acids include terephthalic acid, isophthalic acid, naphthalene dicarboxylic acid, 1,4-cyclohexane dicarboxylic acid, or a combination thereof. A specific dicarboxylic acid includes a combination of isophthalic acid and terephthalic acid wherein the weight ratio of isophthalic acid to terephthalic acid is 91:9 to 2:98.

Specific ester units include ethylene terephthalate, n-propylene terephthalate, n-butylene terephthalate, 1,4-cyclohexanedimethylene terephthalate, and ester units derived from isophthalic acid, terephthalic acid, and resorcinol (ITR)). The molar ratio of ester units to carbonate units in the copolymers can vary broadly, for example 1:99 to 99:1, or 10:90 to 90:10, more preferably 25:75 to 75:25, or 2:98 to 15:85, depending on the desired properties of the final composition. Specific poly(ester-carbonate)s are those including bisphenol A carbonate units and isophthalate-terephthalate-bisphenol A ester units, also commonly referred to as poly(carbonate-ester)s (PCE) poly(phthalate-carbonate)s (PPC) depending on the molar ratio of carbonate units and ester units.

Polyester-polycarbonate copolymers can have a M_{w} of 1,500 to 100,000 g/mol, including, for example 1,700 to 50,000 g/mol, as measured by GPC using a crosslinked styrene-divinyl benzene column with polycarbonate standards. In an aspect, poly(aliphatic ester)-polycarbonates have a M_{w} of 15,000 to 45,000 g/mol.

Polycarbonates can be manufactured by processes such as interfacial polymerization and melt polymerization, which are known, and are described, for example, in WO 2013/175448 A1 and WO 2014/072923 A1. An end-capping agent (also referred to as a chain stopper agent or chain terminating agent) can be included during polymerization to provide end groups, for example monocyclic phenols such as phenol, p-cyanophenol, and C₁₋₂₂ alkyl-substituted phenols such as p-cumyl-phenol, resorcinol monobenzoate, and p-and tertiarybutyl phenol, monoethers of diphenols, such as p-methoxyphenol, monoesters of diphenols such as resorcinol monobenzoate, functionalized chlorides of aliphatic monocarboxylic acids such as acryloyl chloride and methacryoyl chloride, and mono-chloroformates such as phenyl chloroformate, alkyl-substituted phenyl chloroformates, p-cumyl phenyl chloroformate, and toluene chloroformate. Combinations of different end groups can be used. Branched polycarbonate blocks can be prepared by adding a branching agent during polymerization, for example trimellitic acid, trimellitic anhydride, trimellitic trichloride, tris-p-hydroxyphenylethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents can be added at a level of 0.05 to 2.0 wt%. A combination of a linear polycarbonate and a branched polycarbonate can be used.

In an aspect, the polycarbonate is a homopolymer. In a further aspect, the homopolymer includes repeating units derived from bisphenol A (BPA).

In an aspect, the polycarbonate is a copolymer. In a further aspect, the copolymer includes repeating units derived from BPA. In yet a further aspect, the copolymer includes repeating units derived from sebacic acid. In an even further aspect, the copolymer includes repeating units derived from sebacic acid and BPA.

In an aspect, the polycarbonate includes a blend of at least two polycarbonate polymers. In a further aspect, the polycarbonate includes a first polycarbonate polymer component and a second polycarbonate polymer component.

An additive composition can be used, including one or more additives selected to achieve a desired property, with the proviso that the additive(s) are also selected to not significantly adversely affect a desired property of the reactive polymer composition. The additive composition or individual additives can be mixed at a suitable time during the mixing of the components for forming the composition. The additive composition can include an impact modifier, flow modifier, filler (e.g., a particulate polytetrafluoroethylene (PTFE), glass, carbon, mineral, or metal), reinforcing agent (e.g., glass fibers), antioxidant, heat stabilizer, light stabilizer, ultraviolet (UV) light stabilizer, UV absorbing additive, plasticizer, lubricant, release agent (such as a mold release agent), antistatic agent, anti-fog agent, antimicrobial agent, colorant (e.g., a dye or pigment), surface effect additive, radiation stabilizer, flame retardant, anti-drip agent (e.g., a PTFE-encapsulated styrene-acrylonitrile copolymer (TSAN)), or a combination thereof. For example, a combination of a heat stabilizer, mold release agent, and ultraviolet light stabilizer can be used. The additives can be used in the amounts known to be effective. For example, the total amount of the additive composition (other than any impact modifier, filler, or reinforcing agent) can be 0.001 to 10.0 wt%, or 0.01 to 5 wt%, each based on the total weight of the reactive polymer composition.

The reactive polymer composition can optionally include an additional thermoplastic polymer different from thermoplastic polymer reactive with the binder reactive functional group. Examples of additional thermoplastic polymers that can be used include polyacetals (e.g., polyoxyethylene and polyoxymethylene), poly(C₁₋₆ alkyl)acrylates, polyacrylamides, polyamides, (e.g., aliphatic polyamides, polyphthalamides, and polyaramides), polyamideimides, polyanhydrides, polyarylates, polyarylene ethers (e.g., polyphenylene ethers), polyarylene sulfides (e.g., polyphenylene sulfides), polyarylene sulfones (e.g., polyphenylene sulfones), polybenzothiazoles, polybenzoxazoles, polycarbonates (including polycarbonate copolymers such as polycarbonate-siloxanes, polycarbonate-esters, and polycarbonate-ester-siloxanes), polyesters (e.g., polyethylene terephthalates, polybutylene terephthalates, polyarylates, and polyester copolymers such as polyester-ethers), polyetheretherketones, polyetherimides (including copolymers such as polyetherimide-siloxane copolymers), polyetherketoneketones, polyetherketones, polyethersulfones, polyimides (including copolymers such as polyimide-siloxane copolymers), poly(C₁₋₆ alkyl)methacrylates, polymethacrylamides, polynorbornenes (including copolymers containing norbornenyl units), polyolefins (e.g., polyethylenes, polypropylenes, polytetrafluoroethylenes, and their copolymers, for example ethylene-alpha-olefin copolymers), polyoxadiazoles, polyoxymethylenes, polyphthalides, polysilazanes, polysiloxanes, polystyrenes (including copolymers such as acrylonitrile-butadiene-styrene (ABS) and methyl methacrylate-butadiene-styrene (MBS)), polysulfides, polysulfonamides, polysulfonates, polysulfones, polythioesters, polytriazines, polyureas, polyurethanes, polyvinyl alcohols, polyvinyl esters, polyvinyl ethers, polyvinyl halides, polyvinyl ketones, polyvinyl thioethers, polyvinylidene fluorides, or the like, or a combination thereof.

In an aspect, the reactive polymer composition can include a catalyst. The catalyst can be an alkali or alkaline earth metal salt of hydroxide, superoxide, thiolate, sulfide, C₁₋₂₀ alkoxide, C₆₋₂₀ aryloxide, C₁₋₂₀ carboxylate, phosphate, phosphonate, phosphite, sulfate, C₁₋₂₀ alkyl or aryl sulfonate, sulfite, or a combination thereof. Exemplary catalysts include, but are not limited to, lithium hydroxide, sodium hydroxide, potassium hydroxide, cesium hydroxide, magnesium hydroxide, calcium hydroxide, barium hydroxide, lithium formate, sodium formate, potassium formate, cesium formate, lithium acetate, sodium acetate, potassium acetate, lithium carbonate, sodium carbonate, potassium carbonate, lithium methoxide, sodium methoxide, potassium methoxide, lithium ethoxide, sodium ethoxide, potassium ethoxide, lithium phenoxide, sodium phenoxide, potassium phenoxide, sodium sulfate, potassium sulfate, NaH₂PO₃, NaH₂PO₄, Na₂H₂PO₃, KH₂PO₄, CsH₂PO₄, Na₂SO₃, Na₂S₂O₅, sodium mesylate, potassium mesylate, sodium tosylate, potassium tosylate, magnesium disodium ethylenediamine tetraacetate, and combinations thereof.

The method for making the composite includes optionally forming a composite precursor including the reactive fiber system and the reactive polymer composition; and heating the reactive fiber system and the reactive polymer composition under conditions effective to form the modified thermoplastic polymer. The heating can include thermoforming, compression molding, or a combination thereof. In an aspect, the heating does not include extruding, blow molding, rotational molding, or injection molding. It has been discovered that heating by extruding, blow molding, rotational molding, or injection molding does not provide the modified thermoplastic polymer.

The heating can be at a temperature of 200 to 370°C, at a pressure of 80 to 200 kilopascals (kPa), and for a time of 200 to 900 seconds (s). Within this combination of parameters, the temperature can be 200 to 270°C, or 210 to 270°C, or 220 to 260°C; the pressure can be 80 to 180 kPa, or 90 to 180 kPa, or 100 to 180 kPa; and the time can be 200 to 800 s, or 200 to 700 s, or 250 to 620 s. For example, the temperature can be 220 to 260°C, the pressure can be 110 to 160 kPa, and the time can be 200 to 400 s. For example, the temperature can be 220 to 260°C, the pressure can be 110 to 160 kPa, and the time can be 400 to 700 s. For example, the temperature can be 240 to 260°C, the pressure can be 120 to 160 kPa, and the time can be 200 to 700 s.

Also provided is a method of manufacturing a prepreg, including coating the reactive fiber system with the reactive polymer composition. Coating can be by any suitable method, including immersing the reactive fiber system into the reactive polymer composition, spraying the reactive polymer composition onto the reactive fiber system; powder coating the reactive fiber system with the reactive polymer composition, layering a film of the reactive polymer composition on the reactive fiber system; or a combination thereof.

The prepreg can be prepared in any form, where the form can be determined by the shape of the reactive fiber system. In an aspect, the reactive fiber system can be arranged or shaped into a fiber preform. As used herein, the term "fiber preform" refers to the reactive fiber system being arranged in a specified configuration prior to being subjected to the operation or operations that will coat the reactive fiber system with the reactive polymer composition. Examples of fiber preforms include, but are not limited to, a woven fabric, a unidirectional tape, a tailored fiber preform, a fiber layup structure, one or more wound filaments, an automatic tape laying structure, or a shaped fiber structure member.

Prepregs can be prepared by contacting at least two layers of a laminate under conditions of heat and pressure sufficient to consolidate the prepreg. In an aspect, a prepreg includes from one to one hundred layers of the laminate. In another aspect, all the layers of the laminate are formed from the prepreg. In still another aspect, the laminate can include other layers, for example a different prepreg. In some aspects, all the prepreg layers used to form the laminate are the prepregs produced as described herein.

In an aspect, a non-prepreg layer can be present such as a release layer, a copper foil, or an adhesive to enhance bonding between two layers. The adhesive can be applied using any suitable method, for example, spreading, spraying, and dipping. The adhesive can be any adhesive that provides the desired adhesion between layer(s) of the prepregs or tapes. An adhesive can be polyvinylbutyral (PVB), ethylene-vinyl acetate copolymer (EVA), an epoxy, an ultraviolet (UV) or water-curable adhesive such as a cyanoacrylate or other acrylic, or a combination thereof.

In an aspect, the prepreg is a tape that includes a plurality of unidirectional fibers of the reactive fiber system. In aspect, the tape can include continuous unidirectional fibers. In forming laminates from the tapes, the continuous unidirectional fibers of the tapes can be oriented with substantially parallel fibers, where the fibers of one layer are parallel, or more parallel than perpendicular with the fibers of another layer. Alternatively, the continuous unidirectional fiber tapes can be oriented with substantially non-parallel fibers, where the fibers of one layer are less parallel than perpendicular with the fibers of another layer.

In an aspect, the laminate or prepreg is added to the surface of a foam or honeycomb structure, and can also include a decorative foil or film.

In an aspect, the composite is as laminate and the forming includes contacting the reactive fiber system with the reactive polymer composition, thermoforming to form a prepreg, and laminating a plurality of prepregs by thermoforming. The modified thermoplastic polymer can be formed during prepreg formation, during laminate formation, or both.

The term "thermoforming" is used to describe a method that can include the sequential or simultaneous heating and forming of a material onto a mold, wherein the material is originally in the form of a film, sheet, layer, or the like, and can then be formed into a desired shape. Once the desired shape has been obtained, the formed article (e.g., a composite, a prepreg, or a laminate) is cooled below its melt or glass transition temperature.

Exemplary thermoforming methods can include, but are not limited to, mechanical forming such as matched tool forming, calendaring rolls, double belt laminators, indexing presses, multiple daylight presses or the like, membrane assisted pressure/vacuum forming, membrane assisted pressure/vacuum forming with a plug assist, or a combination thereof.

In an aspect, the flexural modulus of the composite is greater than the flexural modulus of a comparable composite that does not include the modified thermoplastic polymer. In an aspect, the flexural modulus of the composite is 120 to 200% greater than, or 130 to 200% greater than, or 140 to 200% greater than the flexural modulus of the comparable composite that does not include the modified thermoplastic polymer. For example, the composite can have a flexural modulus of 7,500 to 20,000 megapascal (MPa), or 8,500 to 20,000 MPa, or 9,000 to 16,000 MPa, as determined according to ISO 527.

In an aspect, the maximum stress of the composite is greater than the maximum stress of a comparable composite that does not include the modified thermoplastic polymer. In an aspect, the maximum stress of the composite is 130 to 200% greater than, or 135 to 200% greater than, or 140 to 200% greater than the maximum stress of the comparable composite that does not include the modified thermoplastic polymer. For example, the composite can have a maximum stress of 140 to 300 megapascal (MPa), or 150 to 275 MPa, or 160 to 250 MPa, as determined according to ISO 527.

As used herein, the "comparable composite" refers to a composite prepared from fiber system and the thermoplastic polymer, where the fiber system includes the non-woven fiber and a binder, where the thermoplastic polymer is the same as in the reactive polymer composition, where the binder does not include a binder reactive functional group, and the comparable composite is prepared under the same conditions as the disclosed composite. Accordingly, the comparable composite does not include the modified thermoplastic polymer.

Also provided is an article including the composite as described herein. In an aspect, the article can be a mass transit component, an energy storage device, a computer device, a household appliance, an electrical component, a recreational component, a decoration device, an electromagnetic interference device, a printed circuit, a cellular antenna device, a cellphone component, an automotive component, a military component, an industrial component, a building component, a construction component, a marine component, an aerospace component, a medical component, a sensor component, a shielding component, an RF component, or a combination thereof. It is to be understand that the descriptions for the articles above may overlap, and thus, for example, an article can be both an RF component and a sensor component.

Exemplary articles that can be prepared from the composites include, for example, acid bath containers; neutralization tanks; aircraft components; bridge beams; bridge deckings; electrolytic cells; exhaust stacks; scrubbers; sporting equipment; stair cases; walkways; automobile exterior panels such as hoods and trunk lids; floor pans; air scoops; pipes and ducts, including heater ducts; industrial fans, fan housings, and blowers; industrial mixers; boat hulls and decks; marine terminal fenders; tiles and coatings; building panels; business machine housings; trays, including cable trays; concrete modifiers; dishwasher and refrigerator parts; electrical encapsulants; electrical panels; tanks, including electrorefining tanks, water softener tanks, fuel tanks, and various filament-wound tanks and tank linings; furniture; garage doors; gratings; protective body gear; luggage; outdoor motor vehicles; pressure tanks; printed circuit boards; optical waveguides; radomes; railings; railroad parts such as tank cars; hopper car covers; car doors; truck bed liners; satellite dishes; signs; solar energy panels; telephone switchgear housings; tractor parts; transformer covers; truck parts such as fenders, hoods, bodies, cabs, and beds; insulation for rotating machines including ground insulation, turn insulation, and phase separation insulation; commutators; core insulation and cords and lacing tape; drive shaft couplings; propeller blades; missile components; rocket motor cases; wing sections; sucker rods; fuselage sections; wing skins and flarings; engine narcelles; cargo doors; tennis racquets; golf club shafts; fishing rods; skis and ski poles; bicycle parts; transverse leaf springs; pumps, such as automotive smog pumps; electrical components, embedding, and tooling, such as electrical cable joints; wire windings and densely packed multi-element assemblies; sealing of electromechanical devices; battery cases; resistors; fuses and thermal cutoff devices; coatings for printed wiring boards; casting items such as capacitors, transformers, crankcase heaters; small molded electronic parts including coils, capacitors, resistors, and semiconductors; as a replacement for steel in chemical processing, pulp and paper, power generation, and wastewater treatment; scrubbing towers; pultruded parts for structural applications, including structural members, gratings, and safety rails; swimming pools, swimming pool slides, hot-tubs, and saunas; drive shafts for under the hood applications; dry toners for copying machines; marine tooling and composites; heat shields; submarine hulls; prototype generation; development of experimental models; laminated trim; drilling fixtures; bonding jigs; inspection fixtures; industrial metal forming dies; aircraft stretch block and hammer forms; vacuum molding tools; flooring, including flooring for production and assembly areas, clean rooms, machine shops, control rooms, laboratories, parking garages, freezers, coolers, and outdoor loading docks; electrically conductive compositions for antistatic applications; for decorative flooring; expansion joints for bridges; injectable mortars for patch and repair of cracks in structural concrete; grouting for tile; machinery rails; metal dowels; bolts and posts; repair of oil and fuel storage tanks, and numerous other articles.

In an aspect, a composite includes the product of the reactive fiber system and the reactive polymer composition derived from 10 to 80 wt%, preferably 10 to 60 wt%, more preferably 10 to 50 wt% of the reactive fiber system, each based on the total weight of the reactive fiber system and the reactive polymer composition used to prepare the product. In this aspect, the reactive fiber system includes the non-woven fiber and the binder including the binder reactive functional group, preferably wherein the binder reactive functional group is hydroxyl, carboxyl, carboxylic anhydride, haloformyl, epoxy, silanol, amino, mercapto, vinyl, or a combination thereof. In this aspect, the reactive fiber system is derived from a non-woven fiber and 1 to 20 wt%, preferably 3 to 15 wt%, more preferably 5 to 15 wt% of the binder, based on the total weight of the non-woven fiber and the binder. In this aspect, the modified thermoplastic polymer is covalently bonded to the reactive fiber system, and the M_{w} of the modified thermoplastic polymer is 3 to 30 wt%, preferably 5 to 30 wt%, more preferably 8 to 30 wt%, still more preferably 10 to 30 wt% less than the M_{w} of the thermoplastic polymer, as determined by GPC with a crosslinked divinyl benzene column and polystyrene standards. In this aspect, PVA is a preferred binder and the thermoplastic polymer is preferably a polyester, polycarbonate, polyamide, polyurethane, polyurea, a random or block poly(carbonate ester), poly(carbonate ether), poly(ester ether), poly(carbonate ether ester), poly(ester amide), poly(ester ether amide), poly(carbonate amide), poly(carbonate ether amide), poly(ester urethane), poly(ester ether-urethane), poly(carbonate urethane), poly(carbonate ether urethane), poly(ester urea), poly(ester ether urea), poly(carbonate urea), poly(carbonate ether urea), poly(ether amide), poly(amide urethane), poly(amide urea), poly(urethane urea), poly(arylene ether), or a combination thereof.

In a method of making the composite of these aspects, the reactive fiber system and the reactive polymer composition are heated by thermoforming, compression molding, or a combination thereof at a temperature of 200 to 280°C, a pressure of 80 to 200 kPa, and for a time of 200 to 900 seconds, to form the modified thermoplastic polymer, i.e., conditions effective to react the binder reactive functional group and the thermoplastic polymer to cleave a polymer chain of the thermoplastic polymer to form the modified thermoplastic polymer, wherein the modified thermoplastic polymer includes a covalent bond to the reactive fiber system. For example, reacting can include reacting a first cleaved polymer chain with the binder reactive functional group to form the modified thermoplastic polymer; and reacting a second cleaved polymer chain with a second thermoplastic polymer, an additive, the non-woven fiber, or a combination thereof.

Preferred articles including the composite of these aspects, or made by the foregoing method, include a mass transit component, an energy storage device, a computer device, a household appliance, an electrical component, a recreational component, a decoration device, an electromagnetic interference device, a printed circuit, a cellular antenna device, a cellphone component, an automotive component, a military component, an industrial component, a building component, a construction component, a marine component, an aerospace component, a medical component, a sensor component, a shielding component, or an RF component.

In other aspects, the reactive polymer composition includes a thermoplastic polymer comprising a polymer reactive group, wherein the polymer reactive group is reactive with the binder reactive functional group. The polymer reactive group can be attached to the thermoplastic polymer, and as a residue of the corresponding modified thermoplastic polymer, as an end group, as a pendant moiety, as a functional group of the polymer backbone, or a combination thereof. For example, the polymer reactive group can be anhydride, amino, hydroxyl, halogen, thiol, aldehyde, C₁₋₆ alkyl ester, carboxyl, epoxy, isocyanate, vinyl, alkynyl, or a combination thereof. Thus, the modified thermoplastic polymer can be derived from reaction of the polymer reactive group and the binder reactive functional group to form a covalent bond. In an aspect, the modified thermoplastic polymer includes a reaction product of the polymer reactive group and the binder reactive functional group, a reaction product of the thermoplastic polymer and the binder reactive functional group, or a combination thereof.

This disclosure is further illustrated by the following examples, which are nonlimiting.

### EXAMPLES

The materials listed in Table 1 were used in the examples.

**Table 1**

| Material | Description | Source |
|---|---|---|
| PC1 | BPA-polycarbonate film, having a thickness of 125 µm and a Mw of 29,400 g/mol by GPC (obtained as LEXAN 8010MC-112) | SABIC |
| PC2 | Amorphous BPA-polycarbonate prepared by interfacial polymerization, having a M_{w} of 21,000 to 22,000 g/mol by GPC | SABIC |
| CF1A | Wet-laid non-woven carbon fiber mat, having a surface density of 50 g/m², a fiber diameter of 7 µm, and containing 10-15 wt% of a polyvinyl alcohol binder (obtained as OPTIMAT 20301A) | Technical Fibre Products |
| CF1B | Wet-laid non-woven carbon fiber mat, having a surface density of 80 g/m², a fiber diameter of 7 µm, and containing 10-15 wt% of a polyvinyl alcohol binder (obtained as OPTIMAT 20301 A) | Technical Fibre Products |
| CF2 | Wet-laid non-woven carbon fiber mat, having a surface density of 50 g/m², a fiber diameter of 7 µm, and containing 10-15 wt% of a styrene-acrylic binder (obtained as OPTIMAT 20352A) | Technical Fibre Products |
| CF3 | Chopped carbon fibers, having a fiber diameter of 7 µm, and containing 4 wt% of a glycerol binder (obtained as SIGRAFIL C G100) | SGL Carbon |
| CF4 | Chopped carbon fibers, having a fiber diameter of 7 µm, and containing 3 wt% of a polycarbonate-suitable binder (obtained as SIGRAFIL C C6-4.0/240-T160) | SGL Carbon |
| Phosphite | Tris(di-t-butylphenyl)phosphite | Sigma |

Molecular weight was determined by gel permeation chromatography (GPC) using a cross-linked styrene-divinylbenzene column. Molecular weight was calibrated to polycarbonate references using an ultraviolet-visible detector at 254 nm. For the composite laminates, a three point bending tests were performed on parts having a length of 50 mm, a width of 10 mm and a thickness of 4 mm. The cross-head speed was 2 mm/min. Flexural properties were determined at 23°C in accordance with ISO-178. Tensile properties were measured according to ISO-527 on a sample having a thickness of 4 mm. Izod notched impact strength (INI ASTM) was determined at 23°C using 3.2 mm bars in accordance with ASTM D256-02. Izod notched impact strength (INI ISO) was determined at 23°C using notched 4 mm ISO bars in accordance with the ISO-180:2000. Vicat softening temperature was measured using 4 mm ISO bars at a load of 50 N and a speed of 120 °C/h (B120) in accordance with ISO-306. Heat distortion temperature (HDT) was measured using the flat side of 4 mm ISO bars and a load of 1.8 MPa (A/f), in accordance with the ISO-75 with a 5.5 J hammer. Melt volume flow rate (MVR) was measured at 300°C/1.2 kg with a 300 or 900 second dwell time in accordance with ISO-1133. Puncture-impact (MAI) testing was determined in accordance with ISO-6603.

Laminate composite samples were prepared by sandwiching a non-woven carbon fiber mat between two polycarbonate (PC1, M_{w} of 29,400 g/mol) films to form a laminate. The laminate was subsequently thermoformed using a film laminator (OASYS TECHNOLOGIES LTD) according to the multi-step press conditions in Table 2.

**Table 2**

| Press Conditions 3 | | | | Press Conditions 4 | | | |
|---|---|---|---|---|---|---|---|
| Step | Temp (°C) | Pressure (kPa) | Time (s) | Step | Temp (°C) | Pressure (kPa) | Time (s) |
| 1 | 245 | 69 | 1 | 1 | 245 | 69 | 1 |
| 2 | 235 | 138 | 300 | 2 | 235 | 138 | 600 |
| 3 | 235 | 138 | 1 | 3 | 235 | 138 | 1 |
| 4 | 235 | 138 | 1 | 4 | 235 | 138 | 1 |
| 5 | 40 | 207 | - | 5 | 40 | 138 | - |

| Press Conditions 5 | | | | Press Conditions 6 | | | |
|---|---|---|---|---|---|---|---|
| Step | Temp (°C) | Pressure (kPa) | Time (s) | Step | Temp (°C) | Pressure (kPa) | Time (s) |
| 1 | 260 | 69 | 1 | 1 | 260 | 69 | 1 |
| 2 | 250 | 138 | 300 | 2 | 250 | 138 | 600 |
| 3 | 250 | 138 | 1 | 3 | 250 | 138 | 1 |
| 4 | 250 | 138 | 1 | 4 | 250 | 138 | 1 |
| 5 | 250 | 138 | 1 | 5 | 250 | 138 | 1 |
| 6 | 40 | 207 | - | 6 | 40 | 207 | - |

Table 3 shows the molecular weights (g/mol) of the polycarbonates of Examples 1-4 after pressing, the change in molecular weight after pressing, and the processing conditions when using the carbon fiber mat having a reactive binder (CF1A) having a surface density of 50 g/m².

**Table 3**

| Example | Fiber | M_{w} | Mₙ | ΔM_{w} | Press Conditions | Fiber weight (g) | Total laminate weight (g) | Fiber Amount (wt%) |
|---|---|---|---|---|---|---|---|---|
| 1 | CF1A | 27800 | 10900 | -1600 | 3 | 0.26 | 1.96 | 13.27 |
| 2 | CF1A | 26200 | 10500 | -3200 | 4 | 0.26 | 1.98 | 13.13 |
| 3 | CF1A | 26000 | 10400 | -3400 | 5 | 0.26 | 1.98 | 13.13 |
| 4 | CF1A | 23200 | 9700 | -6200 | 6 | 0.27 | 1.98 | 13.64 |

Table 4 shows the molecular weights (g/mol) of the polycarbonates of Examples 5-8 after pressing, the change in molecular weight after pressing, and the processing conditions when using the carbon fiber mat having a reactive binder (CF1B) having a surface density of 80 g/m².

**Table 4**

| Example | Fiber | M_{w} | Mₙ | ΔM_{w} | Press Conditions | Fiber weight (g) | Total laminate weight (g) | Fiber Amount (wt%) |
|---|---|---|---|---|---|---|---|---|
| 5 | CF1B | 28200 | 11100 | -1200 | 3 | 0.45 | 2.15 | 20.93 |
| 6 | CF1B | 26600 | 10600 | -2800 | 4 | 0.44 | 2.12 | 20.75 |
| 7 | CF1B | 26400 | 10600 | -3000 | 5 | 0.43 | 2.11 | 20.38 |
| 8 | CF1B | 22800 | 9600 | -6600 | 6 | 0.44 | 2.11 | 20.85 |

The results in Tables 3 and 4 show that M_{w} is decreased at all press conditions when using the carbon fiber mat having a reactive binder . The results of Examples 2, 4, 6, and 8 demonstrate that increased pressing temperature and longer pressing times favorably result in a further decrease in M_{w}. The fiber density does not change the relative trend for decreased M_{w}, which indicates the reactive binder, rather than the fiber density, provides the decreases in M_{w}.

Table 5 shows the molecular weights (g/mol) of the polycarbonates of Comparative Examples 9-12, the change in molecular weight after pressing, and the processing conditions when using the carbon fiber mat having the non-reactive binder (CF2).

**Table 5**

| Comparative Example | Fiber | M_{w} | Mₙ | ΔM_{w} | Press Conditions | Fiber weight (g) | Total laminate weight (g) | Fiber Amount (wt%) |
|---|---|---|---|---|---|---|---|---|
| 9 | CF2 | 29000 | 11300 | -400 | 3 | 0.27 | 1.98 | 13.64 |
| 10 | CF2 | 28400 | 11200 | -1000 | 4 | 0.26 | 1.93 | 13.47 |
| 11 | CF2 | 28600 | 11200 | -800 | 5 | 0.27 | 1.99 | 13.57 |
| 12 | CF2 | 28200 | 11100 | -1200 | 6 | 0.26 | 1.96 | 13.27 |

These results show that a slight decrease in M_{w} is observed at all press conditions when using the carbon fiber mat having the non-reactive binder (CF2). Modifying the processing conditions by increasing the temperature, time, or both, resulted in a modest decrease in M_{w}. The data in Table 3-5 shows the substantial decrease of M_{w} is achieved when using the reactive binders under all pressing conditions, whereas the non-reactive binder is unable achieve these same results.

Table 6 shows the mechanical properties of Examples 3-4 and Comparative Examples 11-12.

**Table 6**

| | Units | 3 | 4 | 11 | 12 |
|---|---|---|---|---|---|
| Binder Type | - | reactive | reactive | non-reactive | non-reactive |
| ΔM_{w} | g/mol | -3400 | -6200 | -800 | -1200 |
| Flexural Modulus (FM) | MPa | 10868 | 9617 | 6765 | 7192 |
| Maximum Stress (Stress) | MPa | 186 | 170 | 122 | 130 |
| ΔFM vs. Comparative Example 11 | % | 61 | 42 | - | 6 |
| ΔStress vs. Comparative Example 11 | % | 53 | 40 | - | 6 |
| ΔStr at strain vs. Comparative Example 11 | % | 47 | 43 | - | 9 |

These results show the relative increases in flexural modulus, maximum stress, and maximum stress at strain for Examples 3-4 and Comparative Example 12 when compared to the properties of Comparative Example 11. For Examples 3 and 4, which included the reactive binder, a considerable increase in flexural properties was achieved relative to Comparative Examples 11-12. The decreased molecular weight of Comparative Examples 11-12, which include the non-reactive binder, is a result of the reactivity between the carbon fiber surface functionality with the polycarbonate or the reaction of a newly formed phenol-functionalized polycarbonate with the resin itself, which provides a decrease to M_{w} and only a slight increase in physical properties. For Examples 3-4, which include the reactive binder, the further decreases in M_{w} are the result of covalent bonding between the binder and the polycarbonate via cleavage of the backbone, in addition to the reactivity between the carbon fiber surface functionality with the polycarbonate or the reaction of a newly formed phenol-functionalized polycarbonate with the resin itself. This reactivity and the resulting connection between the polycarbonate and the fiber/binder system provide the improved the flexural properties.

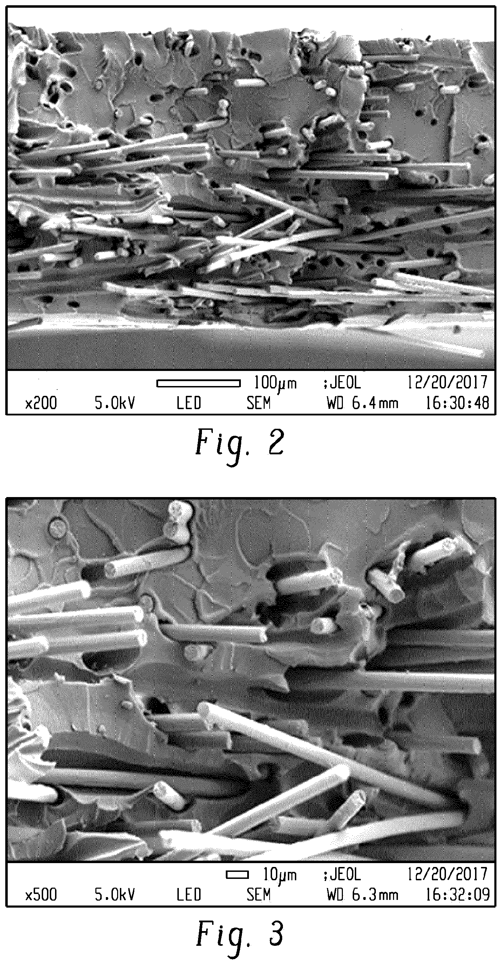

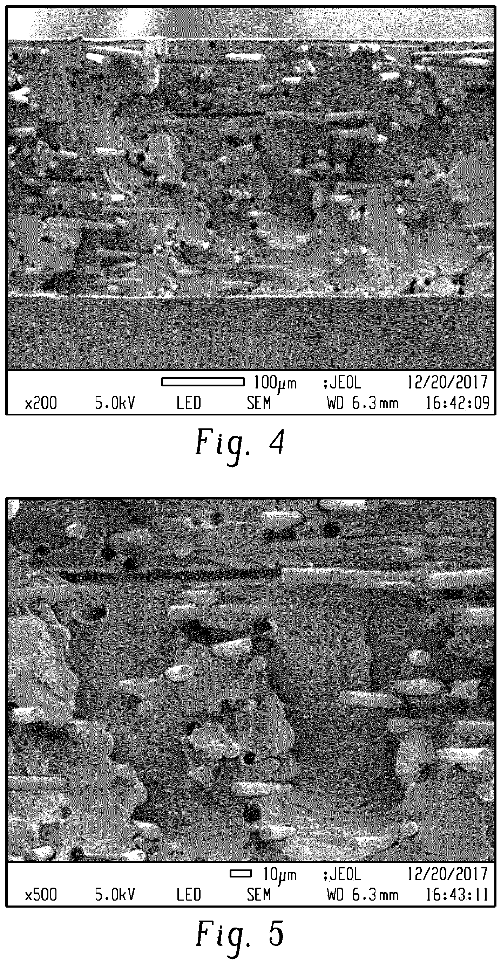

FIGS. 2-5 demonstrate the improved adhesion achieved using the reactive binders. FIGS. 2 and 3 are SEM images of the composite derived from the non-reactive binder, which shows poor adhesion between CF2 and the polycarbonate matrix. In these images with the non-reactive binder, the fibers are observed to extend from the polymer matrix, which indicates the fibers have been pulled out from the matrix when the composite is fractured. FIGS. 4 and 5 are SEM images of the composite derived from the reactive binder, which shows improved adhesion between CF1A and the polycarbonate matrix. In these images with the reactive binder, the number of fibers extending out of the polymer matrix is greatly decreased, which indicates the fibers are broken when the composite is fractured. The improved tensile properties for Examples 3 and 4 are a result of the improved adhesion between the reactive binder-containing CF1A and the polycarbonate matrix.

Comparative Examples 13-14 were prepared using polycarbonate and chopped carbon fibers having either a reactive binder (CF3) or a non-reactive binder (CF4), where the samples were prepared by extruding and injection molding, rather than by thermoforming. Polycarbonate powder and phosphite stabilizer were combined using a paint shaker and then fed through a feeder to an extruder. The glass fibers were fed separately through the hopper on a downstream side-feeder. Samples were extruded on a 25 mm twin screw extruder at a melt temperature of 270-300°C and a rotation of 300 revolutions per minute (rpm), and then pelletized. The pellets were dried for 3-5 hours at 90-100°C. Dried pellets were injection molded at temperatures of 280-300°C. Thin-wall parts (0.8 mm) were molded at 290-315°C.

Table 7 shows the compositions and properties of Comparative Examples 13-14.

**Table 7**

| Component | Amount | 13 | 14 | |
|---|---|---|---|---|
| PC2 | wt% | 79.95 | 79.95 | |
| Phosphite | wt% | 0.05 | 0.05 | |
| CF3 | wt% | 20 | - | |
| CF4 | wt% | - | 20 | |
| | | | | |

| Property | Units | | | Δ* (%) |
|---|---|---|---|---|
| MVR - 300s | cm³/10 min | 50.6 | 8.2 | 516 |
| MVR - 900s | cm³/10 min | 128.1 | 8.5 | 1410 |
| HDT - 1.8MPa - Flat | °C | 137 | 142 | -4 |
| VICAT - B/120 | °C | 144 | 150 | -4 |
| Flexural Modulus | MPa | 10859 | 11957 | -9 |
| Flexural Strength | MPa | 162 | 220 | -26 |
| Stress at Break-Avg | MPa | 160 | 219 | -27 |
| Tensile Modulus | MPa | 12726 | 14309 | -11 |
| Tensile Stress at break | MPa | 113 | 152 | -26 |
| INI ISO | kJ/m² | 4.7 | 7.4 | -37 |
| INI ASTM | J/m | 38 | 76 | -50 |
| MAI: Puncture energy-Avg | J | 4 | 7 | -51 |
| MAI: Energy at max force-Avg | J | 3.1 | 6.4 | -51 |

| | | | | |
|---|---|---|---|---|
| *Δ is the percent change from Comparative Example 14 (non-reactive binder) to Comparative Example 13 (reactive binder) | | | | |

These results show the reactive binder reacts unfavorably with polycarbonate when processing by extrusion and injection molding. Unlike the compression molded samples in Examples 1-8, processing by extrusion and injection molding in Comparative Example 13 resulted in a decrease to all measured physical properties relative to Comparative Example 14, which was prepared with a non-reactive binder.

This disclosure further encompasses the following Aspects.

Aspect 1. A composite including a product of a reactive fiber system and a reactive polymer composition, wherein the reactive fiber system includes: a non-woven fiber; and a binder including a binder reactive functional group, and the reactive polymer composition includes a thermoplastic polymer reactive with the binder reactive functional group; and wherein the composite includes a modified thermoplastic polymer including a reaction product of the thermoplastic polymer and the binder reactive functional group.

Aspect 2. The composite of Aspect 1, wherein the modified thermoplastic polymer is covalently bonded to the reactive fiber system.

Aspect 3. The composite of any one of the preceding Aspects, wherein the modified thermoplastic polymer is derived from the thermoplastic polymer via chain scission and reaction with the binder reactive functional group to form a covalent bond.

Aspect 4. The composite of any one of the preceding Aspects, wherein a flexural modulus of the composite is greater than a flexural modulus of a comparable composite prepared from a binder that does not comprise the binder reactive functional group and that does not comprise the modified thermoplastic polymer, as determined according to ISO 527.

Aspect 5. The composite of any one of the preceding Aspects, further comprising a cleaved thermoplastic polymer that is derived from the thermoplastic polymer via chain scission and is not covalently bonded to the reactive fiber system, wherein a weight average molecular weight of the cleaved thermoplastic polymer and the thermoplastic polymer after composite formation is less than a weight average molecular weight of the thermoplastic polymer prior to composite formation, as determined by GPC; preferably wherein the weight average molecular weight of the cleaved thermoplastic polymer and the thermoplastic polymer after composite formation is 3 to 30 wt%, preferably 5 to 30 wt%, more preferably 8 to 30 wt%, still more preferably 10 to 30 wt% less than the weight average molecular weight of the thermoplastic polymer prior to composite formation, as determined by GPC.

Aspect 6. The composite of any one of the preceding Aspects, wherein the non-woven fiber is a mineral fiber, a plant fiber, a synthetic fiber, or a combination thereof; preferably wherein the non-woven fiber is glass fiber, glass wool fiber, mineral wool fiber, slag wool fiber, stone wool fiber, basalt fiber, silica fiber, quartz fiber, alumina fiber, steel fiber, silicon carbide fiber, acrylic fiber, carbon fiber, melamine fiber, polyester fiber, polyethylene fiber, polyethylene terephthalate fiber, polylactic acid fiber, polypropylene fiber, polyamide fiber, polyaramid fiber, polyimide fiber, polyphenylene sulfide fiber, polytetrafluoroethylene fiber, cellulosic fiber, cotton fiber, jute fiber, kenaf fiber, bamboo fiber, hemp fiber, linen fiber, flax fiber, or a combination thereof.

Aspect 7. The composite of any one of the preceding Aspects, wherein the binder reactive functional group is hydroxyl, carboxyl, carboxylic anhydride, haloformyl, epoxy, silanol, amino, mercapto, vinyl, or a combination thereof; preferably wherein the binder includes a polyvinyl alcohol.

Aspect 8. The composite of any one of the preceding Aspects, wherein the composite includes 20 to 90 wt% of the modified thermoplastic polymer, preferably 30 to 90 wt% of the modified thermoplastic polymer, each based on the total weight of the reactive polymer composition and the modified thermoplastic polymer.

Aspect 9. The composite of any one of the preceding Aspects, wherein the product of the reactive fiber system and the reactive polymer composition is derived from 10 to 80 wt%, preferably 10 to 60 wt%, more preferably 10 to 50 wt% of the reactive fiber system, each based on the total weight of the reactive fiber system and the reactive polymer composition used to prepare the product.

Aspect 10. The composite of any one of the preceding Aspects, wherein the reactive fiber system is derived from the non-woven fiber and 1 to 20 wt%, preferably 3 to 15 wt%, more preferably 5 to 15 wt% of the binder, each based on the total weight of the non-woven fiber and the binder.

Aspect 11. The composite of any one of the preceding Aspects, wherein the thermoplastic polymer is a thermoplastic polymer or copolymer that is reactive with the binder reactive functional group via chain scission, preferably wherein the thermoplastic polymer is polycarbonate, polyacetal, poly(C₁₋₆ alkyl)acrylate, polyacrylamide, polyamide, polyamideimide, polyanhydride, polyarylate, polyarylene ether, polyarylene sulfide, polyarylene sulfone, polybenzothiazole, polybenzoxazole, polyester, polyetheretherketone, polyetherimide, polyetherketoneketone, polyetherketone, polyethersulfone, polyimide, poly(C₁₋₆ alkyl)methacrylate, polymethacrylamide, polynorbornene, polyolefin, polyoxadiazole, polyoxymethylene, polyphthalide, polysilazane, polysiloxane, polystyrene, polysulfide, polysulfonamide, polysulfonate, polysulfone, polythioester, polytriazine, polyurea, polyurethane, polyvinyl alcohol, polyvinyl ester, polyvinyl ether, polyvinyl halide, polyvinyl ketone, polyvinyl thioether, polyvinylidene fluoride, a copolymer thereof, or a combination thereof; more preferably wherein the thermoplastic polymer is polyester, polycarbonate, polyamide, polyurethane, polyurea, a random or block poly(carbonate ester), poly(carbonate ether), poly(ester ether), poly(carbonate ether ester), poly(ester amide), poly(ester ether amide), poly(carbonate amide), poly(carbonate ether amide), poly(ester urethane), poly(ester ether-urethane), poly(carbonate urethane), poly(carbonate ether urethane), poly(ester urea), poly(ester ether urea), poly(carbonate urea), poly(carbonate ether urea), poly(ether amide), poly(amide urethane), poly(amide urea), poly(urethane urea), poly(arylene ether), or a combination thereof; even more preferably wherein the thermoplastic polymer is polycarbonate.

Aspect 12. A method of making the composite of any one of the preceding Aspects, the method including: heating the reactive fiber system and the reactive polymer composition under conditions effective to form the modified thermoplastic polymer.

Aspect 13. The method of Aspect 12, wherein the heating is effective to react the binder reactive functional group and the thermoplastic polymer to cleave a polymer chain of the thermoplastic polymer to form the modified thermoplastic polymer, wherein the modified thermoplastic polymer includes a covalent bond to the reactive fiber system; preferably wherein the heating includes thermoforming, compression molding, or a combination thereof; more preferably wherein the heating includes thermoforming, compression molding, or a combination thereof at a temperature of 200 to 280°C, a pressure of 80 to 200 kPa, and for a time of 200 to 900 seconds.

Aspect 14. The method of Aspect 13, wherein the heating is further effective to react a first cleaved polymer chain with the binder reactive functional group to form the modified thermoplastic polymer; and react a second cleaved polymer chain with a second thermoplastic polymer, an additive, the non-woven fiber, or a combination thereof.

Aspect 15. An article including the composite of any one of Aspects 1-11 or made by the method of any one of Aspects 12-14; preferably wherein the article is a mass transit component, an energy storage device, a computer device, a household appliance, an electrical component, a recreational component, a decoration device, an electromagnetic interference device, a printed circuit, a cellular antenna device, a cellphone component, an automotive component, a military component, an industrial component, a building component, a construction component, a marine component, an aerospace component, a medical component, a sensor component, a shielding component, an RF component, or a combination thereof.

The compositions, methods, and articles can alternatively comprise, consist of, or consist essentially of, any appropriate materials, steps, or components herein disclosed. The compositions, methods, and articles can additionally, or alternatively, be formulated to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other (e.g., ranges of "up to 25 wt%, or, more specifically, 5 to 20 wt%", is inclusive of the endpoints and all intermediate values of the ranges of "5 to 25 wt%," etc.). "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity and are to be construed to cover both the singular and the plural, unless otherwise indicated herein or clearly contradicted by context. "Or" means "and/or" unless clearly stated otherwise. Reference throughout the specification to "some aspects", "an aspect", and so forth, means that a particular element described in connection with the aspect is included in at least one aspect described herein, and may or may not be present in other aspects. In addition, it is to be understood that the described elements may be combined in any suitable manner in the various aspects. A "combination thereof' is open and includes any combination including at least one of the listed components or properties optionally together with a like or equivalent component or property not listed.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo groups (e.g., bromo and fluoro), or only chloro groups can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl)a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example -CH₂CH₂CN is a C₂ alkyl group substituted with a nitrile.

Unless substituents are otherwise specifically indicated, each of the foregoing groups can be unsubstituted or substituted, provided that the substitution does not significantly adversely affect synthesis, stability, or use of the compound. "Substituted" means that the compound, group, or atom is substituted with at least one (e.g., 1, 2, 3, or 4) substituents instead of hydrogen, where each substituent is independently nitro (-NO₂), cyano (-CN), hydroxy (-OH), halogen, thiol (-SH), thiocyano (-SCN), C₁₋₆ alkyl, C₂₋₆ alkenyl, C₂₋₆ alkynyl, C₁₋₆ haloalkyl, C₁₋₉ alkoxy, C₁₋₆ haloalkoxy, C₃₋₁₂ cycloalkyl, C₅₋₁₈ cycloalkenyl, C₆₋₁₂ aryl, C₇₋₁₃ arylalkylene (e.g., benzyl), C₇₋₁₂ alkylarylene (e.g., toluyl), C₄₋₁₂ heterocycloalkyl, C₃₋₁₂ heteroaryl, C₁₋₆ alkyl sulfonyl (-S(=O)₂-alkyl), C₆₋₁₂ arylsulfonyl (-S(=O)₂-aryl), or tosyl (CH₃C₆H₄SO₂-), provided that the substituted atom's normal valence is not exceeded. When a compound is substituted, the indicated number of carbon atoms is the total number of carbon atoms in the compound or group, including those of any substituents.

While particular aspects have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A composite comprising a product of a reactive fiber system and a reactive polymer composition, wherein
the reactive fiber system comprises:
a non-woven fiber; and
a binder comprising a binder reactive functional group, and
the reactive polymer composition comprises a thermoplastic polymer reactive with the binder reactive functional group; and
wherein the composite comprises a modified thermoplastic polymer comprising a reaction product of the thermoplastic polymer and the binder reactive functional group.

2. The composite of claim 1, wherein the modified thermoplastic polymer is covalently bonded to the reactive fiber system.

3. The composite of any one of the preceding claims, wherein the modified thermoplastic polymer is derived from the thermoplastic polymer via chain scission and reaction with the binder reactive functional group to form a covalent bond.

4. The composite of any one of the preceding claims, wherein a flexural modulus of the composite is greater than a flexural modulus of a comparable composite prepared from a binder that does not comprise the binder reactive functional group and that does not comprise the modified thermoplastic polymer, as determined according to ISO 527.

5. The composite of any one of the preceding claims, further comprising a cleaved thermoplastic polymer that is derived from the thermoplastic polymer via chain scission and is not covalently bonded to the reactive fiber system,
wherein a weight average molecular weight of the cleaved thermoplastic polymer and the thermoplastic polymer after composite formation is less than a weight average molecular weight of the thermoplastic polymer prior to composite formation, as determined by gel permeation chromatography;
preferably wherein the weight average molecular weight of the cleaved thermoplastic polymer and the thermoplastic polymer after composite formation is 3 to 30 wt%, preferably 5 to 30 wt%, more preferably 8 to 30 wt%, still more preferably 10 to 30 wt% less than the weight average molecular weight of the thermoplastic polymer prior to composite formation, as determined by gel permeation chromatography.

6. The composite of any one of the preceding claims, wherein the non-woven fiber is a mineral fiber, a plant fiber, a synthetic fiber, or a combination thereof;
preferably wherein the non-woven fiber is glass fiber, glass wool fiber, mineral wool fiber, slag wool fiber, stone wool fiber, basalt fiber, silica fiber, quartz fiber, alumina fiber, steel fiber, silicon carbide fiber, acrylic fiber, carbon fiber, melamine fiber, polyester fiber, polyethylene fiber, polyethylene terephthalate fiber, polylactic acid fiber, polypropylene fiber, polyamide fiber, polyaramid fiber, polyimide fiber, polyphenylene sulfide fiber, polytetrafluoroethylene fiber, cellulosic fiber, cotton fiber, jute fiber, kenaf fiber, bamboo fiber, hemp fiber, linen fiber, flax fiber, or a combination thereof.

7. The composite of any one of the preceding claims, wherein the binder reactive functional group is hydroxyl, carboxyl, carboxylic anhydride, haloformyl, epoxy, silanol, amino, mercapto, vinyl, or a combination thereof; preferably wherein the binder comprises a polyvinyl alcohol.

8. The composite of any one of the preceding claims, wherein the composite comprises 5 to 90 wt% of the modified thermoplastic polymer, preferably 15 to 90 wt% of the modified thermoplastic polymer, based on the total weight of the modified thermoplastic polymer, the reactive polymer composition, and optionally the cleaved thermoplastic polymer.

9. The composite of any one of the preceding claims, wherein the product of the reactive fiber system and the reactive polymer composition is derived from 10 to 80 wt%, preferably 10 to 60 wt%, more preferably 10 to 50 wt% of the reactive fiber system, based on the total weight of the reactive fiber system and the reactive polymer composition used to prepare the product.

10. The composite of any one of the preceding claims, wherein the reactive fiber system is derived from the non-woven fiber and 1 to 20 wt%, preferably 3 to 15 wt%, more preferably 5 to 15 wt% of the binder, based on the total weight of the non-woven fiber and the binder.

11. The composite of any one of the preceding claims, wherein the thermoplastic polymer is
a thermoplastic polymer or copolymer that is reactive with the binder reactive functional group via chain scission,
preferably wherein the thermoplastic polymer is polycarbonate, polyacetal, poly(C₁₋₆ alkyl)acrylate, polyacrylamide, polyamide, polyamideimide, polyanhydride, polyarylate, polyarylene ether, polyarylene sulfide, polyarylene sulfone, polybenzothiazole, polybenzoxazole, polyester, polyetheretherketone, polyetherimide, polyetherketoneketone, polyetherketone, polyethersulfone, polyimide, poly(C₁₋₆ alkyl)methacrylate, polymethacrylamide, polynorbornene, polyolefin, polyoxadiazole, polyoxymethylene, polyphthalide, polysilazane, polysiloxane, polystyrene, polysulfide, polysulfonamide, polysulfonate, polysulfone, polythioester, polytriazine, polyurea, polyurethane, polyvinyl alcohol, polyvinyl ester, polyvinyl ether, polyvinyl halide, polyvinyl ketone, polyvinyl thioether, polyvinylidene fluoride, a copolymer thereof, or a combination thereof;
more preferably wherein the thermoplastic polymer is polyester, polycarbonate, polyamide, polyurethane, polyurea, a random or block poly(carbonate ester), poly(carbonate ether), poly(ester ether), poly(carbonate ether ester), poly(ester amide), poly(ester ether amide), poly(carbonate amide), poly(carbonate ether amide), poly(ester urethane), poly(ester ether-urethane), poly(carbonate urethane), poly(carbonate ether urethane), poly(ester urea), poly(ester ether urea), poly(carbonate urea), poly(carbonate ether urea), poly(ether amide), poly(amide urethane), poly(amide urea), poly(urethane urea), poly(arylene ether), or a combination thereof;
even more preferably wherein the thermoplastic polymer is polycarbonate.

12. A method of making the composite of any one of the preceding claims, the method comprising: heating the reactive fiber system and the reactive polymer composition under conditions effective to form the modified thermoplastic polymer.

13. The method of claim 12, wherein the heating is effective to react the binder reactive functional group and the thermoplastic polymer to cleave a polymer chain of the thermoplastic polymer to form the modified thermoplastic polymer, and wherein the modified thermoplastic polymer comprises a covalent bond to the reactive fiber system;
preferably wherein the heating comprises thermoforming, compression molding, or a combination thereof; more preferably wherein the heating comprises thermoforming, compression molding, or a combination thereof at a temperature of 200 to 370°C, at a pressure of 80 to 200 kPa, and for a time of 200 to 900 seconds.

14. The method of claim 13, wherein the heating is further effective to
react a first cleaved polymer chain with the binder reactive functional group to form the modified thermoplastic polymer; and
react a second cleaved polymer chain with a second thermoplastic polymer, an additive, the non-woven fiber, or a combination thereof.

15. An article comprising the composite of any one of claims 1 to 11 or made by the method of any one of claims 12 to 14; preferably wherein the article is a mass transit component, an energy storage device, a computer device, a household appliance, an electrical component, a recreational component, a decoration device, an electromagnetic interference device, a printed circuit, a cellular antenna device, a cellphone component, an automotive component, a military component, an industrial component, a building component, a construction component, a marine component, an aerospace component, a medical component, a sensor component, a shielding component, an RF component, or a combination thereof.
